(19) **Europäisches Patentamt / European Patent Office / Office européen des brevets**

(11) **EP 1 465 842 B1**

(12) **FASCICULE DE BREVET EUROPEEN**

(45) Date de publication et mention de la délivrance du brevet:
**22.11.2017 Bulletin 2017/47**

(21) Numéro de dépôt: **03709688.0**

(22) Date de dépôt: **14.01.2003**

(51) Int Cl.:
*C03C 17/36* (2006.01)     *C03C 17/34* (2006.01)
*C03C 3/087* (2006.01)     *C03C 4/02* (2006.01)
*C03B 23/023* (2006.01)

(86) Numéro de dépôt international:
**PCT/EP2003/000428**

(87) Numéro de publication internationale:
**WO 2003/059836 (24.07.2003 Gazette 2003/30)**

(54) **VITRAGE A COUCHES TRANSFORME THERMIQUEMENT**

WÄRMETRANSFORMIERTE VERBUNDGLASPLATTE

HEAT-TRANSFORMED LAMINATED GLASS PANE

(84) Etats contractants désignés:
**AT BE BG CH CY CZ DE DK EE ES FI FR GB GR HU IE IT LI LU MC NL PT SE SI SK TR**

(30) Priorité: **17.01.2002  BE 200200026**

(43) Date de publication de la demande:
**13.10.2004  Bulletin 2004/42**

(73) Titulaire: **AGC Glass Europe**
**1348 Louvain-la-Neuve (BE)**

(72) Inventeurs:
• **Cherdon, Benoît**
  **6040 Jumet (BE)**
• **Decroupet, Daniel**
  **6040 Jumet (BE)**
• **Delmotte, Laurent**
  **6040 Jumet (BE)**
• **Van den Neste, Marc**
  **6040 Jumet (BE)**

(74) Mandataire: **Bayot, Daisy et al**
**AGC Glass Europe**
**Technovation Centre**
**IP Department**
**Rue Louis Blériot, 12**
**6041 Gosselies (BE)**

(56) Documents cités:
**EP-A- 0 757 021     EP-A- 0 812 809**
**EP-A- 1 074 522     EP-A- 1 116 699**
**US-A- 4 919 778**

• **BROWN J T ET AL: "IS YOUR GLASS FULL OF WATER?" CERAMIC ENGINEERING AND SCIENCE PROCEEDINGS, COLUMBUS, US, vol. 17, no. 2, 1996, pages 170-179, XP000622577 ISSN: 0196-6219**

**Description**

L'invention est relative aux vitrages qui comportent des couches fonctionnelles minces, et qui sont soumis à des traitements impliquant une élévation importante de température. Elle concerne particulièrement les vitrages soumis à des opérations de bombage/trempe.

Les vitrages revêtus de couches fonctionnelles minces, quels que sensibles aux traitements impliquant un passage à température élevée, et d'autant plus que la température est plus élevée et le temps de maintien à cette température est plus prolongé. Dans les conditions extrêmes, les traitements thermiques entrepris peuvent conduire à des altérations plus ou moins profondes des propriétés du vitrage ainsi traité.

Les défauts sont de natures variées, et dépendent pour l'essentiel de la constitution de la couche ou du système de couches considéré, mais aussi du mode de production de ces couches.

Pour les couches les plus minces déposées par des techniques dites « sous vide » du type décrit e.g. dans EP-A 0 939 062, les défauts sont par exemple l'apparition d'un voile qui altère la transparence du vitrage, le changement de teinte du vitrage, la présence de brûlures ponctuelles ou non, etc. Les raisons de ces défauts sont à rechercher dans l'interaction des matériaux constitutifs des couches avec celui du substrat verrier ou avec l'atmosphère au contact de ces couches. Il s'agit notamment de la pollution des couches par la diffusion d'ions des matériaux au contact desquels elles se trouvent. Il s'agit aussi par exemple de l'oxydation par l'atmosphère environnante.

Pour les couches les plus épaisses, déposées principalement par des techniques de type pyrolytique, aux défauts précédents peuvent s'ajouter des défauts liés à la continuité de la couche, fissures, craquelures ...

L'apparition de tels défauts, lorsque les conditions de température sont inadaptées, est encore favorisée lorsque le traitement thermique s'accompagne d'une déformation significative du vitrage. Les traitements de bombage qui comprennent

une déformation suivant des formes à double courbure, sont dans ce sens encore plus dommageables que ceux dans lesquels le bombage est de type cylindrique.

Dans les techniques actuelles impliquant le bombage ou la trempe de vitrages comportant des couches minces fonctionnelles, des modalités ont été développées pour limiter l'apparition des défauts. Néanmoins, quelles que soient les précautions prises, les conditions des traitements sont strictement dictées par le risque d'apparition des défauts.

Parmi les précautions prises à l'heure actuelle, il s'agit d'abord par exemple de limiter le temps de traitement aux conditions de température les plus élevées pour tenter de maîtriser les phénomènes de réaction des couches. Il s'agit aussi d'interposer des barrières sous formes de couches additionnelles s'opposant au passage des éléments contaminants. Il s'agit encore par exemple de disposer des couches dites sacrificielles, dont le rôle est de protéger les couches sensibles contre les réactions indésirables, en faisant réagir ces couches sacrificielles avec les éléments contaminants et en prévenant ainsi leur réaction avec les couches sous-jacentes à protéger.

Quels que soient les moyens utilisés, on comprend que ceux-ci soient d'effet limité. Il est donc souhaitable de pouvoir améliorer encore les techniques mises en oeuvre pour disposer d'une plus grande latitude dans les conditions opératoires et/ou dans l'ampleur des modifications introduites dans le formage de ces vitrages à couches.

Les conditions de traitement des vitrages en question dépendent bien entendu de la nature des feuilles de verre. Selon celle-ci, en particulier, les températures nécessaires pour atteindre les conditions de viscosité propices au formage envisagé, peuvent varier sensiblement. L'invention concerne les vitrages dont la composition de la (des) feuille(s) de verre est de type silico-sodo-calcique. Ces compositions sont les plus usuelles dans les applications traditionnelles des vitrages, qu'il s'agisse du bâtiment, de l'automobile ou des applications diverses telles que le mobilier et analogues. Ces compositions présentent les qualités requises de résistance mécanique, chimique, de transparence, et se prêtent à des mises en forme variées.

Pour ces verres, le formage de type bombage/trempe impose comme températures les plus élevées des températures de l'ordre de 650°C. A ces températures les altérations des couches indiquées précédemment interviennent très rapidement. Plus précisément, la dégradation des couches est fonction de l'énergie emmagasinée par le vitrage au cours du traitement, énergie emmagasinée que l'on nomme également « charge thermique ». Il est donc très souhaitable de limiter cette charge thermique en réduisant la température atteinte au cours du traitement et/ou le temps de traitement aux températures les plus élevées.

L'invention se propose de fournir des vitrages revêtus d'une couche ou d'un ensemble de couches fonctionnelles, vitrages qui ont été transformés par un traitement de type bombage/trempe, le verre de ces vitrages étant de type silico-sodo-calcique, ce verre étant selon la revendication 1. La température de transition, déterminée par la norme ISO 7884-8 est approximativement celle correspondant à une viscosité de $10^{13}$ poises. Pour les verres silico-sodo-calciques, elle est typiquement de l'ordre de 550 à 560°C. Ce domaine limité vient de ce que la composition elle-même ne peut varier que dans des valeurs limitées, ceci pour ne pas modifier les compromis nécessaires entre la capacité de mise en forme d'une part, et les qualités, notamment de résistance chimique, d'autre part.

Les verres utilisés pour constituer les vitrages selon l'invention présentent avantageusement une température de transition au plus égale à 548 et de préférence au plus égale à 546°C.

S'il est souhaitable d'avoir une température de transition aussi basse que possible, ce qui se répercute bien évidemment sur la température la plus haute nécessaire pour atteindre les conditions viscoélastiques propres au formage, l'abaissement au delà de certaines limites ne peut être obtenu sans que les propriétés nécessaires par ailleurs, en particulier la résistance à l'eau, ou résistance chimique, ne deviennent insuffisantes.

Traditionnellement l'abaissement de la température de transition est obtenu par une modification de la composition, et plus particulièrement par un accroissement de la teneur en oxydes dits « fondants », notamment de la teneur en oxydes alcalins. On sait que la teneur en oxyde de sodium détermine la résistance chimique. Par ailleurs des teneurs élevées favorisent aussi la diffusion des ions sodium dans les couches fonctionnelles dans lesquelles ils provoquent des dégradations d'autant plus rapides que la température est plus haute. Ne serait ce que pour ces raisons, il est préférable selon l'invention de procéder à l'abaissement de la température de transition sans modifier sensiblement la teneur en sodium.

Selon l'invention, les verres silico-sodo-calciques utilisés sont de préférence de composition pondérale s'établissant dans les limites suivantes :

| | |
|---|---|
| $SiO_2$ | 65-75% |
| $Al_2O_3$ | 0-5% |
| $B_2O_3$ | 0-7% |
| CaO+MgO+BaO+SrO | 5-20% |
| CaO | 0-15% |
| $Na_2O+K_2O+Li_2O$ | 10-20% |

Parmi ces compositions, pour les raisons exposées ci-dessus, il est préférable d'utiliser celles dont la teneur en $Na_2O$ est inférieure à 14,5%, et de préférence, inférieure à 14%.

A ces éléments fondamentaux peuvent s'ajouter des constituants secondaires qui modifient quelques propriétés, en particuliers des constituants colorants : Fe, Ni, Cr, Co, Se...

Dans ces verres silico-sodo-calciques traditionnels, la teneur en potassium est habituellement très faible. La limitation en concentration est fonction essentiellement des coûts respectifs du sodium et du potassium. Ce dernier peut être substitué en partie au sodium lorsque l'on accroît la teneur globale en oxydes fondants dans le but d'abaisser la température de transition. Le potassium diffuse moins facilement que le sodium, et par conséquent, à teneur équivalente, présente une moindre tendance à dégrader les couches portées par le verre. La possibilité de substitution est néanmoins limitée. En pratique selon l'invention, la teneur pondérale en $K_2O$ est avantageusement supérieure à 0,4%, et peut s'élever jusqu'à 2%.

Dans le choix des teneurs respectives de sodium et potassium, il faut encore tenir compte du fait que la modification de certaines propriétés, et en particulier de la résistance chimique ou durabilité, résultant de la substitution pour partie du potassium au sodium, est plus que proportionnelle à l'importance de cette substitution. Ce que l'on désigne par « effet alcalin mixte» se traduit notamment par une dégradation relativement moindre de la durabilité.

La résistance chimique globale des verres ou durabilité, est communément déterminée suivant la procédure de la norme ISO 719. Selon celle-ci, on mesure la teneur en ions sodium d'une solution d'attaque mise en contact avec un échantillon de poudre du verre à analyser. La teneur en ions sodium est représentative de la résistance d'ensemble de la composition du verre. Elle est fonction non seulement de la teneur en ions sodium, mais également de l'ensemble des éléments constitutifs de la matrice vitreuse.

Les verres utilisés pour les vitrages selon l'invention correspondent avantageusement à une composition d'ensemble telle qu'ils présentent une résistance chimique déterminée par la teneur en ions sodium résultant de la mesure d'attaquabilité selon la norme ISO 719, teneur en ions sodium exprimée en poids de $Na_2O$, qui est au plus égale à 160 $\mu$g par gramme de verre testé, et de préférence au plus égale à 155 $\mu$g. Une autre détermination de la durabilité, dans laquelle l'échantillon est soumis à une attaque plus violente peut être utilisée pour atteindre une meilleure précision de la mesure. Selon cette dernière on procède de la façon suivante. Un échantillon de 2g de verre est broyé à une granulométrie comprise entre 315 et 500 25 micromètres. La poudre de verre est mise en contact avec 10cm3 d'une solution 0,1N d'acide chlorhydrique pendant 24h à 96°C. On mesure ensuite la teneur en ions sodium de la solution. La durabilité est exprimée par un pourcentage de $Na_2O$ par rapport au poids du verre utilisé.

Les verres utilisés pour les vitrages selon l'invention correspondent avantageusement à une composition d'ensemble telle qu'ils présentent à la fois une température de transition relativement basse, et une durabilité chimique suffisante pour limiter la dégradation par diffusion des ions sodium lors du traitement thermique. Selon l'invention les vitrages sont constitués de feuilles de verre pour lesquelles la durabilité chimique du verre, mesurée selon la méthode décrite précédemment, conduit avantageusement à une teneur en $Na_2O$ inférieure à 0,050% du poids du verre, et de préférence inférieure à 0,045% du poids du verre.

En dehors des éléments « fondants » la température de transition dépend aussi d'autres constituants du verre, c'est le cas notamment de la teneur en eau incorporée dans le réseau vitreux sous forme d'ions hydroxyles. Dans les compositions silico-sodo-calciques traditionnelles les plus usuelles, la teneur en eau dépend principalement de la technique de fusion mise en oeuvre. La nature de l'atmosphère au-dessus du bassin de fusion influe directement sur cette teneur en eau.

Les mesures de concentration en eau sont faites par spectroscopie infrarouge. La détermination de cette concentration exprimée en partie par million (ppm) est donnée par la formule :

$$H_2O(ppm) = 1807/e(mm) \times \log_{10}[T_{2,6\mu}/ T_{2,88\mu}]$$

dans laquelle e est l'épaisseur de l'échantillon de verre, et T la transmission mesurée pour les longueurs d'onde spécifiées.

Dans la production de vitrages les fours les plus usuels sont alimentés par des brûleurs à air et combustible (gaz ou fuel). L'équilibre qui s'établit dans l'atmosphère au-dessus de la zone de fusion conduit dans ces conditions à des verres dont la teneur en eau est de l'ordre de 200 à 350ppm.

On sait que dans les fours chauffés électriquement, la teneur en eau est sensiblement plus faible et s'établit environ à 150ppm du fait de l'absence d'eau provenant de gaz de combustion.

On sait également par ailleurs que dans la fabrication des bouteilles de verre une teneur en eau plus élevée est avantageuse pour faciliter les opérations de formage, notamment de soufflage.

L'invention propose aussi des vitrages revêtus de couches minces, soumis à des formages nécessitant une élévation de la température au-dessus de la température de transition, dont la composition du verre de la (des) feuille(s) constituant ces vitrages présente une teneur en eau supérieure à 350ppm.

De préférence la teneur en eau des verres utilisés pour la fabrication des vitrages selon l'invention n'est pas inférieure à 400ppm et se situe avantageusement à une valeur supérieure à 500ppm.

Si l'abaissement de la température de transition est fonction de la teneur en eau, celle-ci ne peut être accrue au-delà du seuil de saturation. Aux températures de fusion voisines de 1500°C, ce seuil, pour les compositions du type considéré, se situe aux environs de 1200ppm.

En pratique les conditions usuelles de fabrication conduisent le plus commodément à des teneurs en eau maximales qui avoisinent 900ppm.

La température de transition des verres des vitrages selon l'invention peut être obtenue en choisissant d'intervenir sur divers constituants. Dans la pratique il est possible de se reporter à la teneur en eau des verres silico-sodo-calciques tout en conservant une composition d'ensemble conservant les caractéristiques essentielles de ce type de compositions. Des vitrages selon l'invention sont notamment ceux qui présentent une température de transition telle qu'indiquée précédemment, à savoir inférieure à 550°C, voire inférieure à 548°C , et dont la teneur pondérale en eau est au moins égale à 400ppm.

Pour accroître la teneur en eau, un moyen avantageux consiste à effectuer la fusion dans un four dont les brûleurs fonctionnent en partie ou en totalité avec de l'oxygène. Dans ce type de four la teneur en eau relative de l'atmosphère est sensiblement accrue par rapport à celle des fours dont la combustion est effectuée avec de l'air.

Quelles que soient la composition de base et la teneur en eau choisies, leurs limites indiquées précédemment font que la température de transition des verres utilisés pour la production des vitrages selon l'invention, n'est pas en pratique inférieure à 535°C, et plus fréquemment pas inférieure à 538°C.

Il faut souligner le fait que l'abaissement de quelques degrés de la température de transition est un facteur d'amélioration du traitement des vitrages revêtus de couches plus important que ne le laissent supposer ces chiffres. De manière simplifiée on peut considérer que l'apparition des défauts dans les couches selon les mécanismes indiqués ci-dessus, n'est véritablement significative qu'au dessus d'une température qui, par exemple pour l'oxydation de couches à l'argent, se situe à environ 600°C. La dégradation observée sera d'autant plus importante que la charge thermique critique absorbée par le vitrage au dessus de ce seuil est plus importante, et celle-ci est fonction non seulement de la température, mais aussi du temps de séjour à cette température. Une diminution de quelques degrés de la température de transition conduit à un abaissement global de la sollicitation thermique critique qui peut atteindre 15% ou plus. L'effet sur le produit est donc considérable comme on le verra dans les exemples de mise en oeuvre.

Les propriétés d'absorption du rayonnement du vitrage interviennent également dans la sollicitation thermique des couches. Pour réduire cette dernière, il est nécessaire d'établir le meilleur compromis, une absorption forte élevant rapidement la température permettant de réduire le temps de séjour nécessaire pour obtenir le formage voulu.

On sait que certains constituants entrant dans la composition des verres favorisent l'absorption du rayonnement. C'est notamment le cas des ions hydroxyles et du fer dans sa forme ion ferreux, $Fe^{2+}$. Il est donc souhaitable d'avoir dans la composition des verres formant le substrat des vitrages selon l'invention, une certaine quantité de fer dans cet état. La présence de fer ferreux, influe cependant sur d'autres propriétés des vitrages. En effet si le fer ferreux présente un spectre d'absorption très intense dans l'infrarouge, il absorbe aussi dans le visible. En conséquence, pour les vitrages dont la transmission lumineuse doit être relativement faible, la teneur en fer est avantageusement élevée. Pour les autres, en particulier pour les vitrages de type pare-brise, dont la transmission lumineuse est réglementairement élevée, la teneur en fer doit être parfaitement contrôlée, indépendamment des avantages indiqués précédemment sur le comportement lors du bombage.

A titre d'exemple pour des vitrages de type pare-brise dont la transmission lumineuse doit être de 70 ou 75% selon les normes en vigueur, pour les épaisseurs totales habituelles pour ces applications, qui ne sont pas inférieures à 3,2mm de verre, et, compte tenu de la présence des couches qui diminuent encore la transmission lumineuse, les verres utilisés selon l'invention ont avantageusement une teneur en FeO qui est comprise entre 0,018 et 0,032%, et de préférence entre 0,020 et 0,030%.

Pour des vitrages dont la transmission lumineuse peut être moins élevée, la teneur en fer ferreux peut être sensiblement plus forte. Par exemple, pour une transmission inférieure à 35% et une épaisseur de vitrage de 4mm, la teneur en fer ferreux peut s'élever à une valeur de l'ordre de 0,50%.

Si le bénéfice de la mise en oeuvre de l'invention est sensible quelle que soit la nature des couches ou ensembles de couches des vitrages, ce sont les vitrages revêtus des couches les plus fragiles pour lesquels cette mise en oeuvre est particulièrement utile.

Dans cet ordre, les pare-brise des véhicules automobiles revêtus de couches représentent les produits les plus délicats. Ils cumulent en effet le maximum d'exigences. Ils sont très fréquemment revêtus d'un ensemble de couches comprenant des couches métalliques réfléchissant l'infrarouge, dont on sait qu'elles sont facilement oxydables et dégradables par diffusion des ions alcalins. Ces produits doivent par ailleurs se plier aux demandes des constructeurs qui visent des dimensions de pièces sans cesse croissantes et des formes toujours plus complexes. Les propriétés exigées de ces produits sont en outre extrêmement contraignantes, transmission lumineuse élevée comme indiqué précédemment, et transmission énergétique aussi faible que possible. La première propriété implique des couches très minces et donc particulièrement fragiles.

Les vitrages à couches métalliques sont également utilisés comme vitrages chauffants.

Les assemblages de couches comportent de façon typique des couches métalliques conductrices et réfléchissant les rayonnements infrarouge. Les couches métalliques sont le plus souvent à base d'argent, ou d'argent en combinaison avec d'autres métaux tels que Pd, Pt, Au, Cu. Des couches bloquantes sont utilisées pour prévenir ou ralentir la diffusion des ions sodium ou de l'oxygène à partir du verre, ou, pour l'oxygène, à partir de l'atmosphère. Les couches bloquantes les plus usuelles sont par exemple à base de : AlN, $Si_3N_4$, $SiO_2$, $SiO_xN_y$, $TiO_2$, et leurs mélanges tels $Si_xAl_yN_z$ et $Si_xAl_yO_zN_w$. On utilise encore traditionnellement des couches barrières ou « sacrificielles » qui réagissent avec l'oxygène et protègent ainsi les couches métalliques réfléchissant l'infrarouge. Les couches barrière sont principalement métalliques :Ti, Al, Zn, NiCr, Nb, Ta, ou à base de sous oxydes. Les ensembles comportent aussi des couches diélectriques à base d'oxydes présentant une bonne stabilité thermique, principalement de ZnO, $SnO_2$, $Al_2O_3$, $TiO_2$ et de leur mélanges tels que $ZnSnO_x$, $ZnAlO_x$, $ZnTiO_x$.

Des couches de ce type sont l'objet de demandes de brevet parmi lesquelles les demandes publiées : WO 99/10072; 99/10074 ; 99/10075 ; 99/64362 ; 00/37380.

Indépendamment de ces vitrages, tous ceux présentant des couches fragiles, faisant l'objet de traitements à température supérieure à la température de transition, sont avantageusement réalisés selon l'invention. Il s'agit par exemple de vitrages revêtus de couches anti-réfléchissantes tels que les ensembles de couches alternant indice de réfraction faible, notamment à base de $SiO_2$ , et d'indice fort fort, notamment à base de $TiO_2$, $Nb_2O_5$ et $Ta_2O_5$. Ces couches qui peuvent être obtenues différentes techniques, et notamment pour certaines par pyrolyse, sont relativement épaisses et sont sensibles aux modifications de forme imposées lors des opérations de bombage. Un autre exemple de couche, souvent encore plus épaisse, obtenue habituellement par pyrolyse, est constitué par les couches dites basémissives dont la qualité est souvent altérée par la diffusion des ions sodium du substrat.

L'invention est décrite ci-après de façon plus détaillée, en faisant référence aux graphiques dans lesquels:

- la figure 1 est un graphique montrant l'influence de la teneur en eau sur la température de transition ;
- la figure 2 est un graphique montrant le cycle de traitement thermique des échantillons ;

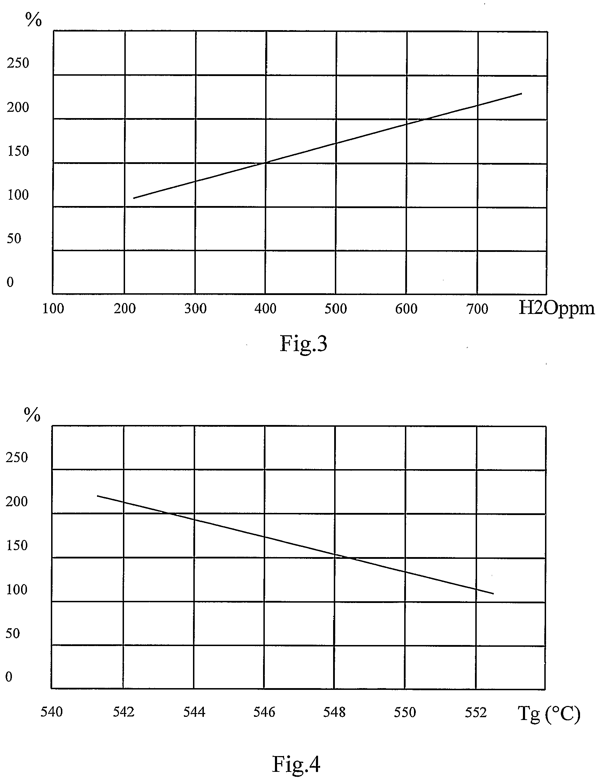

- la figure 3 est un graphique montrant l'aptitude au bombage en fonction de la teneur en eau dans le verre ;
- la figure 4 est un graphique montrant la relation entre l'aptitude au bombage et la température de transition du verre.

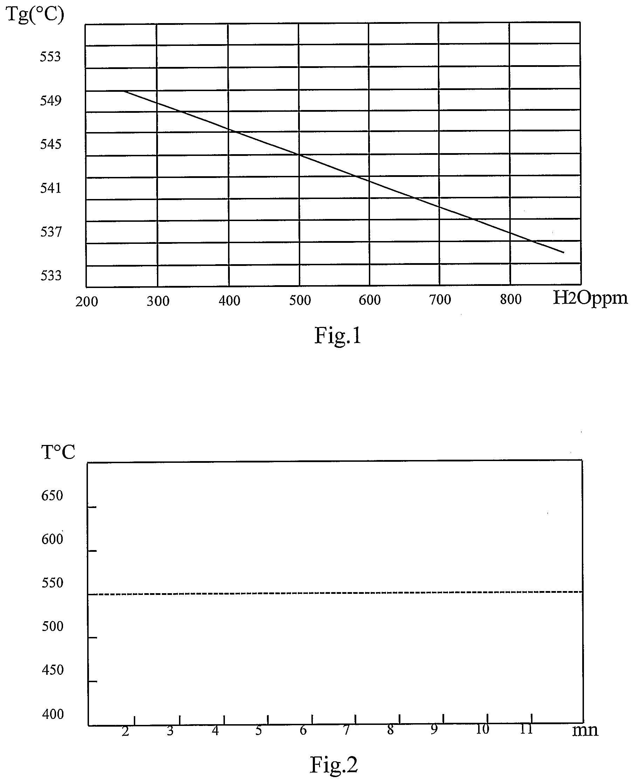

La figure 1 est un graphique établi pour un verre clair de composition pondérale suivante :

| | | | |
|---|---|---|---|
| $SiO_2$ | 71,71 % | $K_2O$ | 0,126 % |
| $Al_2O_3$ | 0,884 % | $Fe_2O_3$ | 0,096 % |
| CaO | 8,59 % | $SO_3$ | 0,232 % |
| MgO | 4,31 % | $TiO_2$ | 0,042 % |

## EP 1 465 842 B1

(suite)

| Na$_2$O | 13,99 % | MnO | 0,0178% |

Dans ce verre la teneur en eau, telle qu'elle s'établit lors de la production dans un four dont les brûleurs sont alimentés par un mélange air-combustible, est de 270ppm.

Le verre est fondu à partir de matières premières et ou de calcin dans un four de laboratoire, et sa teneur en eau est progressivement accrue par passage de vapeur d'eau dans l'échantillon fondu. Les prélèvements successifs font l'objet d'une mesure de température de transition et de teneur en eau.

Le graphique montre une décroissance régulière de la température de transition pour des teneurs en eau croissantes. Sur le domaine considéré, de 270ppm à 870ppm la Tg décroît de 550 à 536°C de manière pratiquement linéaire.

L'essai est arrêté après passage de la vapeur pendant une durée de 6 heures. Dans les conditions de l'expérience, l'équilibre semble être atteint, et un traitement prolongé ne permettrait pas d'accroître encore la teneur en eau de l'échantillon.

Pour étudier les caractéristiques de formage des verres utilisés, on détermine la flèche sur des échantillons de verre passés dans des conditions de température et de durée de séjour analogues à celles établies dans les fours de bombage industriels. Les échantillons sont constitués de lames de verre de 100x30mm et de 3mm d'épaisseur. Les échantillons reposent sur leurs extrémités.

Les échantillons sont introduits dans le four de laboratoire où ils progressent. On mesure en permanence leur température. Le graphique 2 donne les températures atteintes par les échantillons en fonction du temps écoulé au cours de cette progression. La température la plus haute se situe aux environs de 630°C. Il faut remarquer que sur ce graphique le temps de séjour, au-dessus de la température de transition, est de l'ordre de 5 à 6mn.

Les échantillons testés correspondent aux verres dont les teneurs en eau ont été indiquées précédemment. La mesure de la flèche est donnée en pourcentage de la flèche constatée pour l'échantillon de référence correspondant au verre présentant une teneur en eau de 270ppm. Pour ce verre la flèche mesurée est de 2,28mm. Les résultats des mesures sont donnés sur le graphique 3.

On constate que la flèche s'accroît considérablement (elle est plus que doublée, et s'établit à 4,6mm) lorsque l'on atteint des teneurs en eau de l'ordre de 650ppm.

Le graphique 4 reprend la relation de la flèche, cette fois en fonction de la température de transition. Comme indiqué précédemment on constate que des variations limitées de la Tg entraînent des variations sensibles de la capacité du verre au formage de type bombage/trempe. C'est cette particularité qui est mise à profit pour améliorer les conditions de traitement des vitrages comportant des couches sensibles.

Des échantillons de verre silico-sodo-calcique dont la teneur en eau est celle indiquée précédemment (270ppm) sont revêtus d'un ensemble de couches comprenant deux couches d'argent. L'ensemble des couches confère une transmission énergétique limitée en conservant une transmission lumineuse relativement élevée. L'assemblage de couches est le suivant :

$$verre/ZnSnO_x(30nm)/Ag(10nm)/Ti/ZnSnO_x(78nm)/Ag(10nm)/Ti/ZnSnO_x(20nm)/TiO_2(5nm)$$

La feuille de verre revêtue de la couche est placée dans un four de laboratoire porté à la température de 645°C. L'atmosphère du four est de l'air. Les échantillons d'essai sont maintenus dans le four pendant des durées de 5, 10 et 14mn. La transmission lumineuse des échantillons est mesurée après cette épreuve thermique. Quatre échantillons sont mesurés pour chaque temps de traitement. Les résultats des mesures de transmission lumineuse (TL) sont présentés dans le tableau suivant :

| n° | 5mn | 10mn | 14mn |
|----|------|------|------|
| 1 | 76,5% | 76,1% | 74,8% |
| 2 | 77,0% | 76,4% | 75,1% |
| 3 | 77,4% | 77,3% | 76,1% |
| 4 | 78,0% | 77,6% | 76,6% |

Sur ces essais on constate une diminution de la TL avec le temps de séjour dans le four. On constate aussi que la diminution s'accélère avec le temps. Si la diminution est relativement modeste entre 5 et 10mn, elle devient beaucoup plus sensible entre 10 et 14mn. La variation de TL montre que les couches touchées, pour les temps de séjour les plus longs, ne sont plus seulement les couches protectrices mais aussi les couches d'argent elles mêmes.

Les mêmes échantillons de verre revêtus de l'ensemble de couches suivant, sont passés dans le four dont le profil de température est reproduit à la figure 2 : verre/AlN (10nm)/ZnAlO$_x$(20nm)/AgPd(10nm)/ZnAl(1nm)/ZnAlO$_x$(80nm)/AgPd(10nm )/ZnAl(2nm)/ZnAlO$_x$(15nm)/Si$_3$N$_4$(12nm)

Le temps de séjour dans le four est varié en changeant la vitesse de défilement du convoyeur qui transporte les échantillons.

Sur les échantillons on mesure systématiquement la transmission lumineuse et le voile (haze) correspondant à la fraction de lumière diffusée au passage du verre et des couches. Cette valeur est une autre manière de mise en évidence de la dégradation des couches.

Les résultats de ces essais sont rassemblés dans le tableau suivant :

|  | 12mn | 14mn | 16mn48s | 20mn | 26mn40s |
|---|---|---|---|---|---|
| TL% | 75,8 | 75,6 | 75,1 | 74,5 | 73,5 |
| diffusion% | 0,25 | 0,30 | 0,40 | 0,40 | 0,45 |

Comme précédemment, on constate une diminution de la transmission lumineuse avec l'allongement du temps de séjour dans le four, et que la diminution va en s'accélérant. A l'inverse, la diffusion croît en fonction du temps de séjour.

D'un point de vue pratique, les opérations de bombage sur des verres comportant des couches nécessitent des temps de traitement qui dépendent de l'importance des courbures imposées. Dans les conditions de température correspondant au profil indiqué à la figure 2, ce temps de séjour est de l'ordre de 12 à 16mn. On voit que pour ces durées les dégradations sont telles qu'elles peuvent rendre les verres en question inutilisables pour les applications auxquelles ils sont destinés. En particulier on se heurte rapidement aux valeurs les plus basses admises par les normes pour la transmission lumineuse des pare-brise.

Des échantillons du même verre sont revêtus d'un ensemble de couches connu pour ses propriétés bas-émissives. Les couches sont obtenues par pyrolyse gazeuse. Elles comprennent une couche d'oxycarbure de silicium, SiO$_x$C$_y$, surmontée d'une couche d'oxyde d'étain dopé au fluor. Les échantillons sont constitués de feuilles de verre de 6mm d'épaisseur. On procède au recuit des échantillons dans un four statique porté à 670°C, température correspondant à celle utilisée pour la trempe de ce type de vitrage.

L'émissivité avant passage dans le four est mesurée à ε = 0,164. Le temps de séjour des échantillons est réglé sur 10mn pour une première série de quatre échantillons, et 14mn pour une seconde série de quatre échantillons. Les moyennes des valeurs d'émissivité pour ces deux séries d'échantillons s'établissent respectivement à ε = 0,207 et ε = 0,231. Les verres ayant dû subir le plus long séjour dans le four ont donc vu leur performance de réflexion dans l'infrarouge réduite de manière très sensible.

Les dégradations ne se limitent pas à l'émissivité. On sait qu'une difficulté liée aux verres revêtus de ces couches, réside dans les colorations que ces verres présentent notamment en réflexion. La difficulté vient en particulier de la reproductibilité de la teinte.

Les coordonnées colorimétriques L, a, b des échantillons précédents, sont mesurées. Deux échantillons pour chaque temps de séjour font l'objet de ces mesures. Les variations moyennes par rapport aux mêmes mesures effectuées avant le passage dans le four s'établissent de la façon suivante :

|  | ΔL% | Δa | Δb |
|---|---|---|---|
| 10mn | -0,2 | 0 | 0,1 |
| 14mn | -0,1 | -0,6 | 1,7 |

Globalement la variation de couleur est exprimée comme la racine carrée de la somme des carrés des variations des trois paramètres.

$$\Delta E = (\Delta L^2 + \Delta a^2 + \Delta b^2)^{1/2}$$

Dans le cas présent cette variation globale de couleur est négligeable pour les échantillons ayant séjourné 10mn dans le four, et s'établit à ΔE= 1,8 pour les échantillons ayant séjourné 14mn. En pratique, on considère comme tolérable les variations qui restent inférieures à 2. On constate donc que dans le cas envisagé de 14mn de traitement, la limite est pratiquement atteinte et que, par conséquent, des variations de conditions telles que celles qui se produisent en milieu industriel conduiraient inévitablement à des variations de couleurs rédhibitoires.

**Revendications**

1. Vitrage comprenant au moins une feuille de verre, le verre de ce vitrage étant de type silico-sodo-calcique, vitrage revêtu d'une ou plusieurs couches minces fonctionnelles, et qui dans sa fabrication subit au moins une opération comprenant un traitement à température supérieure à la température de transition du verre, **caractérisé en ce que** le verre silico-sodo-calcique présente une température de transition qui est inférieure à 550°C, et un indice de durabilité, exprimé en microgramme de $Na_2O$ par gramme de verre mesuré selon la norme ISO 719, qui est inférieur à 160µg/g et une teneur en eau supérieure à 350ppm.

2. Vitrage selon la revendication 1 dans lequel le verre silico-sodo-calcique présente une température de transition inférieure à 548°C.

3. Vitrage selon la revendication 1 dans lequel le verre présente une température de transition qui n' est pas inférieure à 535°C.

4. Vitrage selon l'une des revendications précédentes dont le verre silico-sodo-calcique est de composition générale pondérale :

| | |
|---|---|
| $SiO_2$ | 65-75% |
| $Al_2O_3$ | 0-5% |
| $B_2O_3$ | 0-7% |
| CaO +MgO+ BaO +SrO | 5-20% |
| CaO | 0-15% |
| $Na_2O + K_2O + Li_2O$ | 10-20% |

5. Vitrage selon l'une des revendications précédentes dans lequel le verre silico-sodo-calcique présente une teneur pondérale en oxyde de sodium inférieure à 14,5%.

6. Vitrage selon la revendication 5 dans lequel le verre silico-sodo-calcique présente une teneur pondérale en oxyde de sodium inférieure à 14,%.

7. Vitrage selon l'une des revendications précédentes dans lequel la teneur pondérale en oxyde de potassium est comprise entre 0,4 et 2%.

8. Vitrage selon l'une des revendications 1 à 4 dans lequel le verre silico-sodo-calcique présente une teneur en eau supérieure à 400ppm.

9. Vitrage selon l'une des revendications 1 à 4 dans lequel le verre silico-sodo-calcique présente une teneur en eau supérieure à 500ppm.

10. Vitrage selon l'une des revendications précédentes dans lequel le verre silico-sodo-calcique correspond à une composition telle que son indice de durabilité, exprimé en microgramme de $Na_2O$ par gramme de verre, mesuré selon la norme ISO 719, est inférieur à 155µg/g.

11. Vitrage selon l'une des revendications précédentes présentant une transmission lumineuse au moins égale à 70% sous une épaisseur de verre qui n' est pas inférieure à 3,2mm, dans lequel les verres entrant dans la constitution de ce vitrage ont une teneur en fer ferreux comprise entre 0,018 et 0,031 %.

12. Vitrage selon la revendication 11 dans lequel les verres ont une teneur en fer ferreux comprise entre 0,020 et 0,030%.

13. Vitrage selon l'une des revendications 1 à 10 présentant une transmission lumineuse sous une épaisseur de 4mm inférieure à 35%, dans lequel les verres entrant dans la constitution de ce vitrage ont une teneur en fer ferreux au plus égale à 0,50%.

**14.** Vitrage selon l'une des revendications précédentes comportant un assemblage de couches minces dont au moins une couche métallique réfléchissant le rayonnement infrarouge.

**15.** Vitrage selon la revendication 14 comportant au moins une couche de l'un des métaux ou combinaison de métaux du groupe comprenant: Ag, Pd, Pt, Au, Cu.

**16.** Vitrage selon l'une des revendications 1 à 13, comportant un assemblage de couches minces conférant des propriétés bas-émissives.

**17.** Vitrage selon l'une des revendications 1 à 13 comportant un assemblage de couches à indices de réfractions alternativement forts et faibles, conférant des propriétés anti-réfléchissantes.


**Patentansprüche**

**1.** Verglasung, die mindestens eine Glasscheibe aufweist, wobei das Glas dieser Verglasung vom Typ des Kalk-Natron-Silicatglases ist, Verglasung, die mit einer oder mehreren funktionellen Dünnschichten beschichtet ist und die bei ihrer Herstellung mindestens einem Vorgang unterzogen wird, der eine Behandlung bei einer Temperatur aufweist, die höher als die Glasübergangstemperatur ist, **dadurch gekennzeichnet, dass** das Kalk-Natron-Silicatglas eine Übergangstemperatur, die niedriger als 550 °C ist, und einen Beständigkeitsindex, ausgedrückt in Mikrogramm $Na_2O$ pro Gramm Glas, gemessen nach der Norm ISO 719, der niedriger als 160 $\mu$g/g ist, und einen Wassergehalt von über 350 ppm aufweist.

**2.** Verglasung nach Anspruch 1, wobei das Kalk-Natron-Silicatglas eine Übergangstemperatur von unter 548 °C aufweist.

**3.** Verglasung nach Anspruch 1, wobei das Glas eine Übergangstemperatur aufweist, die nicht niedriger als 535 °C ist.

**4.** Verglasung nach einem der vorhergehenden Ansprüche, wobei das Kalk-Natron-Silicatglas die folgende allgemeine Gewichtszusammensetzung aufweist:

| | |
|---|---|
| $SiO_2$ | 65-75 % |
| $Al_2O_3$ | 0-5 % |
| $B_2O_3$ | 0-7 % |
| CaO +MgO+ BaO +SrO | 5-20 % |
| CaO | 0-15 % |
| $Na_2O$ + $K_2O$+$Li_2O$ | 10-20 %. |

**5.** Verglasung nach einem der vorhergehenden Ansprüche, wobei das Kalk-Natron-Silicatglas einen Gewichtsgehalt an Natriumoxid von unter 14,5 % aufweist.

**6.** Verglasung nach Anspruch 5, wobei das Kalk-Natron-Silicatglas einen Gewichtsgehalt an Natriumoxid von unter 14, % aufweist.

**7.** Verglasung nach einem der vorhergehenden Ansprüche, wobei der Gewichtsgehalt an Kaliumoxid zwischen 0,4 und 2 % beträgt.

**8.** Verglasung nach einem der Ansprüche 1 bis 4, wobei das Kalk-Natron-Silicatglas einen Wassergehalt von über 400 ppm aufweist.

**9.** Verglasung nach einem der Ansprüche 1 bis 4, wobei das Kalk-Natron-Silicatglas einen Wassergehalt von über 500 ppm aufweist.

**10.** Verglasung nach einem der vorhergehenden Ansprüche, wobei das Kalk-Natron-Silicatglas einer derartigen Zusammensetzung entspricht, dass ihr Beständigkeitsindex, ausgedrückt in Mikrogramm $Na_2O$ pro Gramm Glas, gemessen nach der Norm ISO 719, niedriger als 155 $\mu$g/g ist.

**11.** Verglasung nach einem der vorhergehenden Ansprüche, die eine Lichtdurchlässigkeit von mindestens gleich 70 % bei einer Glasdicke, die nicht niedriger als 3,2 mm ist, aufweist, wobei die Gläser, aus denen diese Verglasung gebildet ist, einen Ferroeisengehalt aufweisen, der zwischen 0,018 und 0,031 % beträgt.

**12.** Verglasung nach Anspruch 11, wobei die Gläser einen Ferroeisengehalt aufweisen, der zwischen 0,020 et 0,030 % beträgt.

**13.** Verglasung nach einem Ansprüche 1 bis 10, die eine Lichtdurchlässigkeit bei einer Dicke von 4 mm von unter 35 % aufweist, wobei die Gläser, aus denen diese Verglasung gebildet ist, einen Ferroeisengehalt von höchstens gleich 0,50 % aufweisen.

**14.** Verglasung nach einem der vorhergehenden Ansprüche, umfassend eine Anordnung von Dünnschichten, darunter mindestens eine Metallschicht, die die Infrarotstrahlung reflektiert.

**15.** Verglasung nach Anspruch 14, umfassend mindestens eine Schicht von einem der Metalle oder der Kombination von Metallen aus der Gruppe, umfassend: Ag, Pd, Pt, Au, Cu.

**16.** Verglasung nach einem der Ansprüche 1 bis 13, umfassend eine Anordnung von Dünnschichten, die Niedrigemissionseigenschaften verleihen.

**17.** Verglasung nach einem der Ansprüche 1 bis 13, umfassend eine Anordnung von Schichten mit abwechselnd hohem und niedrigem Brechungsindex, die antireflektierende Eigenschaften verleihen.

**Claims**

**1.** Glazing comprising at least one glass sheet, the glass of this glazing being of soda-lime-silica type, glazing coated with one or more thin functional layers, and which in its manufacture is subjected to at least one operation comprising a treatment at a temperature greater than the transition temperature of the glass, **characterized in that** the soda-lime-silica glass exhibits a transition temperature which is less than 550°C, and a durability number, expressed in micrograms of $Na_2O$ per gram of glass, measured according to Standard ISO 719, which is less than 160 $\mu$g/g, and a water content of greater than 350 ppm.

**2.** Glazing according to Claim 1, in which the soda-lime-silica glass exhibits a transition temperature of less than 548°C.

**3.** Glazing according to Claim 1, in which the glass exhibits a transition temperature which is not less than 535°C.

**4.** Glazing according to one of the preceding claims, the soda-lime-silica glass of which has the general composition by weight:

| | |
|---|---|
| $SiO_2$ | 65-75% |
| $Al_2O_3$ | 0-5% |
| $B_2O_3$ | 0-7% |
| CaO+ MgO + BaO + SrO | 5-20% |
| CaO | 0-15% |
| $Na_2O + K_2O + Li_2O$ | 10-20% |

**5.** Glazing according to one of the preceding claims, in which the soda-lime-silica glass exhibits a content by weight of sodium oxide of less than 14.5%.

**6.** Glazing according to Claim 5, in which the soda-lime-silica glass exhibits a content by weight of sodium oxide of less than 14.%.

**7.** Glazing according to one of the preceding claims, in which the content by weight of potassium oxide is between 0.4 and 2%.

8. Glazing according to one of Claims 1 to 4, in which the soda-lime-silica glass exhibits a water content of greater than 400 ppm.

9. Glazing according to one of Claims 1 to 4, in which the soda-lime-silica glass exhibits a water content of greater than 500 ppm.

10. Glazing according to one of the preceding claims, in which the soda-lime-silica glass corresponds to a composition such that its durability number, expressed in micrograms of $Na_2O$ per gram of glass, measured according to Standard ISO 719, is less than 155 $\mu$g/g.

11. Glazing according to one of the preceding claims, exhibiting a light transmission at least equal to 70% under a glass thickness which is not less than 3.2 mm, in which the glasses participating in the composition of this glazing have a content of ferrous iron of between 0.018 and 0.031%.

12. Glazing according to Claim 11, in which the glasses have a content of ferrous iron of between 0.020 and 0.030%.

13. Glazing according to one of Claims 1 to 10, exhibiting a light transmission under a thickness of 4 mm of less than 35%, in which the glasses participating in the composition of this glazing have a content of ferrous iron at most equal to 0.50%.

14. Glazing according to one of the preceding claims, comprising an assembly of thin layers, including at least one metal layer which reflects infrared radiation.

15. Glazing according to Claim 14, comprising at least one layer of one of the metals or combination of metals from the group comprising: Ag, Pd, Pt, Au and Cu.

16. Glazing according to one of Claims 1 to 13, comprising an assembly of thin layers conferring low-e properties.

17. Glazing according to one of Claims 1 to 13, comprising an assembly of layers having alternately high and low refractive indices, conferring antireflection properties.

Fig.1

Fig.2

Fig.3

Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0939062 A
- WO 9910072 A
- WO 9910074 A
- WO 9910075 A
- WO 9964362 A
- WO 0037380 A